# FASCICULE DE BREVET EUROPEEN

(11) **EP 2 190 088 B1**
(45) Date de publication et mention de la délivrance du brevet: **23.05.2012**
(21) Numéro de dépôt: 09168239.3
(22) Date de dépôt: 20.08.2009
(51) Int. Cl.: H02B 1/30

(54) **Structure à emboîtement et application aux armoires métalliques**
Steckkonstruktion und deren Anwendung bei Metallmöbeln
Fit-together structure and its application to metalic cabinets

(30) Priorité: 13.10.2008 FR 0856933
(43) Date de publication de la demande: 26.05.2010
(73) Titulaire: Legrand France, 87000 Limoges (FR); Legrand SNC, 87000 Limoges (FR)
(72) Inventeur: Houard, Fabrice, 76750 Buchy (FR)
(74) Mandataire: Bentz, Jean-Paul

(56) Documents cités:
- DE-A1- 4 412 462
- US-A- 6 069 787
- US-B1- 6 580 030

## Description

L'invention concerne, de façon générale, les techniques de construction dans le domaine du mobilier métallique.

Plus précisément, l'invention concerne, selon un premier de ses aspects, une structure métallique comprenant au moins un premier et un deuxième profilés se rejoignant à angle droit, formant une première paire de profilés, et présentant chacun une section transversale formant au moins un "U", cette structure étant réalisée au moins partiellement à partir d'un flan métallique initialement plan, conformé par découpage et pliage, les premier et deuxième profilés présentant des première et deuxième faces respectives de premier type, coplanaires et monobloc, des première et deuxième faces respectives de deuxième type, formant un dièdre droit et non monobloc, et des première et deuxième faces respectives de troisième type, coplanaires, non monobloc, et respectivement parallèles aux première et deuxième faces de premier type.

Une structure de ce type est par exemple décrite dans la demande de brevet DE 44 12 462 et brevet US 6069787.

La conception de ce type de structure doit depuis toujours s'efforcer de surmonter la difficulté que représente l'obtention d'une rigidité satisfaisante en dépit de l'utilisation d'une quantité minimale de matière et d'une simplification maximale de la fabrication.

Dans ce contexte, l'invention a pour but de proposer une structure qui apporte une solution nouvelle et efficace à ce problème ancien.

A cette fin, la structure de l'invention, par ailleurs conforme à la définition générique qu'en donne le préambule ci-dessus, est essentiellement caractérisée en ce que le premier profilé comprend une première face de quatrième type s'étendant à partir de la première face de troisième type en s'éloignant, suivant une direction orthogonale, de la première face de premier type, en ce que la deuxième face de troisième type présente une échancrure s'étendant perpendiculairement à un pli de séparation des deuxièmes faces de troisième et de deuxième types, et en ce que les premier et deuxième profilés sont liés l'un à l'autre au moins par une liaison d'emboîtement obtenue par engagement d'un bord de la première face du quatrième type dans l'échancrure.

Il est ensuite possible de prévoir que cette structure comprenne une deuxième paire de profilés formée d'un premier et d'un deuxième profilés également obtenus par découpage et pliage dudit flan, et en ce que chacun des premiers et deuxièmes profilés est respectivement lié à chacun des deuxièmes et premiers profilés par une liaison d'emboîtement obtenue par engagement d'un bord d'une face du quatrième type prévue sur l'un des profilés liés dans une échancrure prévue sur l'autre des profilés liés.

En pratique, il est judicieux de prévoir une face de quatrième type sur le premier profilé de chaque paire, et une échancrure à chacune des deux extrémités du deuxième profilé de chaque paire.

Dans ce cas, les premier et deuxième profilés des première et deuxième paires définissent une base de la structure et cette structure peut en outre comprendre, pour chaque couple de profilés formé par un premier et un deuxième profilés appartenant ou non à une même desdites première et deuxième paires, un troisième profilé fixé à angle droit aux premier et deuxième profilés de ce couple, la structure étant ainsi dotée de quatre montants perpendiculaires à la base et dont chacun est constitué par le troisième profilé fixé à un des quatre couples de premier et deuxième profilés.

Il est également avantageux de prévoir que, pour chaque couple de premier et deuxième profilés, les deuxièmes faces des deuxième et troisième types présentent une section saillante s'étendant au-delà d'un plan tangent à la première face du deuxième type, que le troisième profilé présente au moins des première et deuxième faces extrêmes à angle droit prenant respectivement appui sur les première et deuxième faces du deuxième type, et que ce troisième profilé présente en outre au moins des première et deuxième faces intermédiaires prenant respectivement appui, dans la section saillante, sur la tranche de la deuxième face du troisième type et sur la tranche d'un dièdre formé par les deuxièmes faces des deuxième et troisième types.

Il peut aussi être judicieux de prévoir que, pour chaque couple de premier et deuxième profilés, la deuxième face intermédiaire du troisième profilé s'étende au-delà d'un plan tangent à la deuxième face du deuxième type, et que le troisième profilé comprenne en outre des troisième et quatrième faces intermédiaires à angle droit, se raccordant à angle droit respectivement à la deuxième face intermédiaire et à la deuxième face extrême.

La deuxième face extrême du troisième profilé peut alors prendre appui sur le bord de la première face du quatrième type.

L'invention concerne également l'application d'une structure telle que précédemment définie à la réalisation d'un coffret ou d'une armoire de connexion électrique et / ou informatique.

D'autres caractéristiques et avantages de l'invention ressortiront clairement de la description qui en est faite ci-après, à titre indicatif et nullement limitatif, en référence aux dessins annexés, dans lesquels :
- la figure 1 est une vue en perspective d'une structure correspondant à un mode de réalisation possible de l'invention, représentée à un premier stade de fabrication;
- la figure 2 est une vue en perspective d'une structure correspondant à un mode de réalisation possible de l'invention, représentée à un deuxième stade de fabrication, postérieur au premier;
- la figure 3 est une vue en perspective à échelle agrandie d'un détail de la structure illustrée à la figure 2;
- la figure 4 est une vue en perspective à échelle encore agrandie du détail illustré à la figure 3, observé sous un angle d'incidence légèrement différent et à un troisième stade de fabrication, postérieur au deuxième;
- la figure 5 est une vue en perspective analogue à celle de la figure 2, représentant la même structure dans le troisième stade de fabrication;
- la figure 6 est une vue en perspective analogue à celle de la figure 5, représentant la même structure après assemblage complet de sa base;
- la figure 7 est une vue en perspective à échelle agrandie d'un détail de la structure illustrée à la figure 6, observé sous un angle d'incidence légèrement différent;
- la figure 8 est une vue en perspective partielle à échelle agrandie de la structure illustrée à la figure 6, observée avant l'adjonction d'un nouveau profilé;
- la figure 9 est une vue en perspective analogue à celle de la figure 8, représentant la structure sous un autre angle d'incidence;
- la figure 10 est une vue en perspective partielle à échelle agrandie de la structure illustrée à la figure 6, observée sous un autre angle d'incidence et après l'adjonction du nouveau profilé;
- la figure 11 est une vue en perspective partielle à échelle agrandie de la structure illustrée à la figure 6, observée sous un angle d'incidence encore différent et après l'adjonction du nouveau profilé, ce dernier étant représenté sectionné pour faciliter l'observation de cette structure;
- la figure 12 est une vue en perspective partielle à échelle agrandie de la structure illustrée à la figure 6, observée après adjonction du nouveau profilé et sous un angle d'incidence différent de celui utilisé pour la figure 11; et
- la figure 13 est une vue en perspective d'une armoire utilisant une structure conforme à l'invention.

Comme annoncé précédemment, l'invention concerne une structure métallique réalisée au moins partiellement à partir d'un flan métallique F initialement plan et conformé par découpage et pliage.

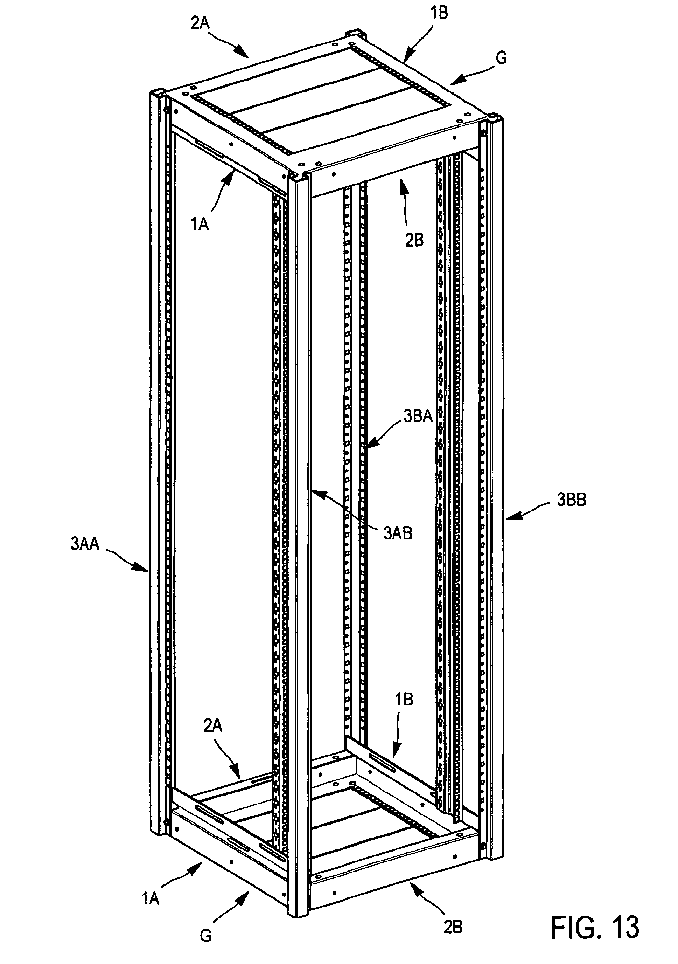

Ce flan permet de définir une base G (figure 13), le terme de "base" devant ici être compris comme désignant un ensemble ou sous-ensemble présentant une cohésion mécanique et constituant un élément de construction, indépendamment de la fonction remplie par cet élément et de la position qu'il occupe lors de son utilisation finale.

Cette base comprend au moins deux profilés 1A et 2A se rejoignant à angle droit, formant une première paire de profilés 1A, 2A, et présentant chacun une section transversale suivant au moins partiellement le contour d'un "U".

Chacun de ces profilés 1A et 2A présente au moins trois faces dont chacune correspond à un segment du "U" de la section transversale de ce profilé.

Plus précisément, ces profilés 1A et 2A comprennent des première et deuxième faces respectives de premier type, 11 et 21, ces faces étant coplanaires et monobloc.

En d'autres termes, les faces respectives 11 et 21 des profilés 1A et 2A sont celles qui viennent de matière avec le flan F et qui s'étendent dans le plan initial de ce flan.

Les profilés 1A et 2A comprennent également des première et deuxième faces respectives de deuxième type, 12 et 22, qui forment ensemble un dièdre droit et qui ne sont pas monobloc.

Ainsi, bien que ces faces 12 et 22 soient contiguës, elles proviennent de deux bandes du flan F qui n'étaient pas initialement contiguës.

Les profilés 1A et 2A comprennent par ailleurs des première et deuxième faces respectives de troisième type, 13 et 23, qui sont coplanaires sans être monobloc, et qui sont respectivement parallèles aux première et deuxième faces de premier type, 11 et 21.

Pour rigidifier la base G, le profilé 1A comprend une première face de quatrième type 14 qui s'étend à partir de la première face de troisième type 13 et qui s'éloigne de la première face de premier type 11 en suivant une direction orthogonale à cette face 11.

Par ailleurs, la deuxième face de troisième type 23 présente une échancrure 230 qui s'étend perpendiculairement au pli 232 qui sépare la deuxième face de troisième type 23 de la deuxième face de deuxième type 22.

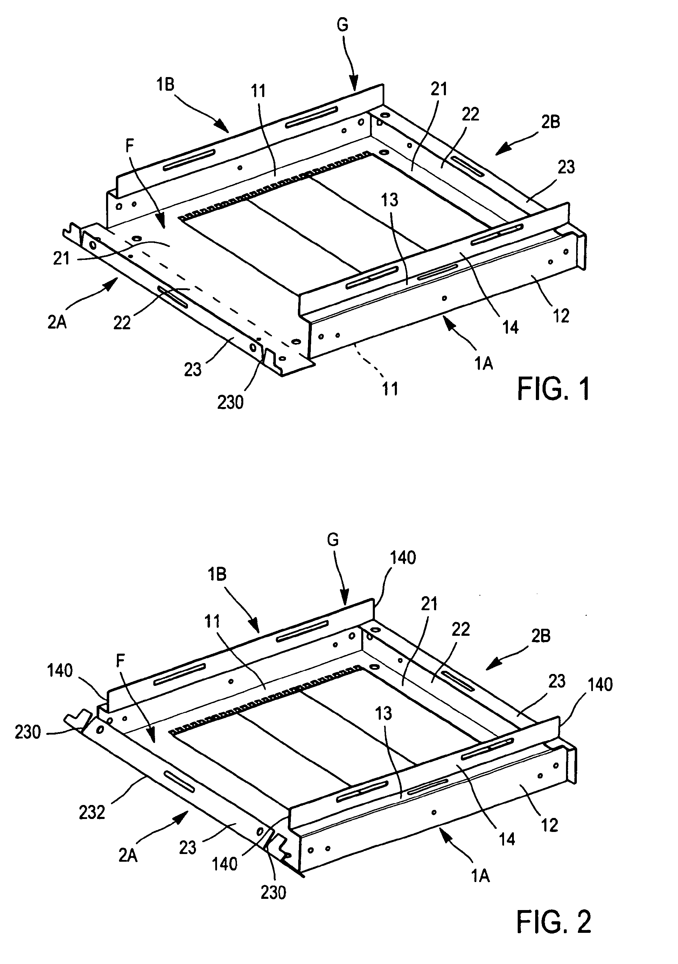

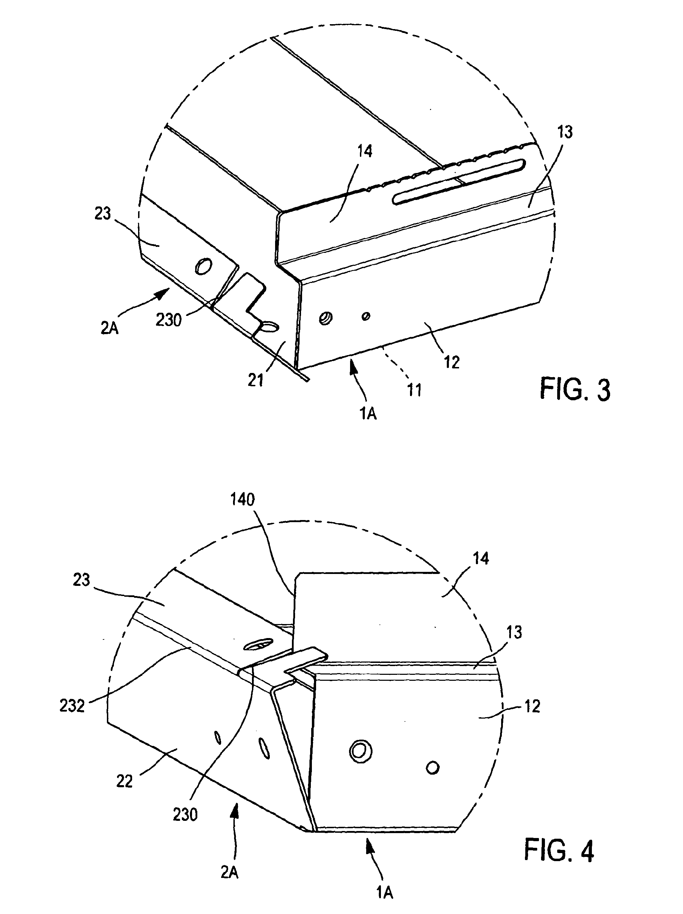

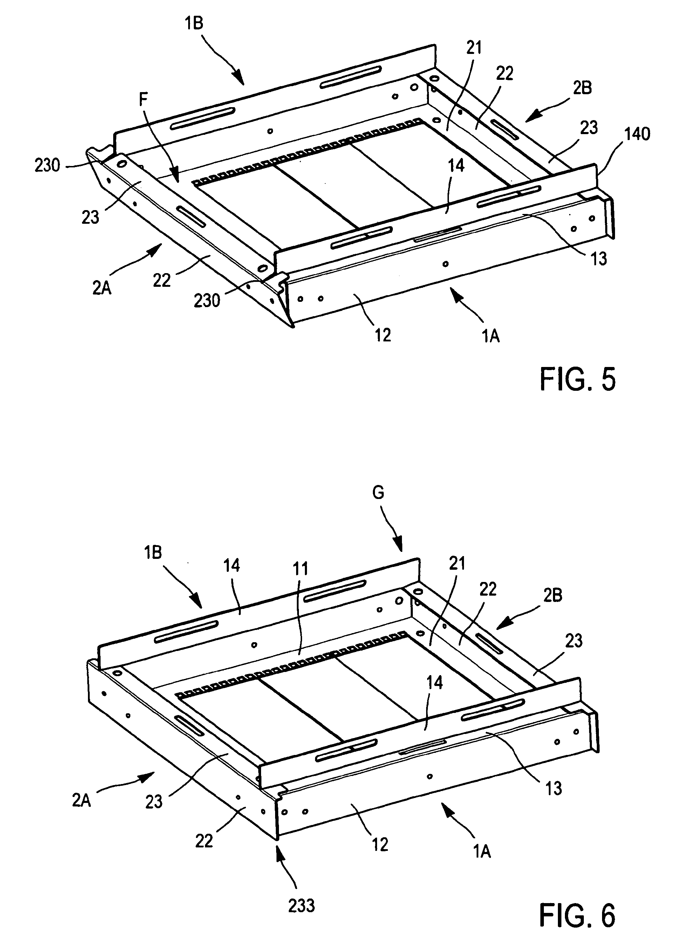

Comme le montre la séquence des figures 1 à 6, les profilés 1A et 2A peuvent ainsi être liés l'un à l'autre par une liaison d'emboîtement obtenue en engageant, dans l'échancrure 230, le bord 140 de la première face du quatrième type 14.

Comme le montrent notamment les figures 1, 2, 5 et 6, la base G peut aussi comprendre une deuxième paire de profilés formée de profilés 1B et 2B également obtenus par découpage et pliage du même flan F, le profilé 1B s'étendant parallèlement au profilé 1A, et le profilé 2B s'étendant parallèlement au profilé 2A.

Chacun des profilés 1A et 1B est lié à chacun des profilés 2A et 2B, et réciproquement, par une liaison d'emboîtement du type précédemment décrit, c'est-à-dire par une liaison obtenue en engageant le bord 140 d'une face du quatrième type 14 prévue sur l'un des profilés liés dans une échancrure 230 correspondante prévue sur l'autre des profilés liés.

En l'occurrence, la face de quatrième type 14 est prévue sur le premier profilé 1A et 1B de chacune des paires de profilés, et l'échancrure 230 est prévue à chacune des deux extrémités du deuxième profilé 2A et 2B de chacune de ces paires.

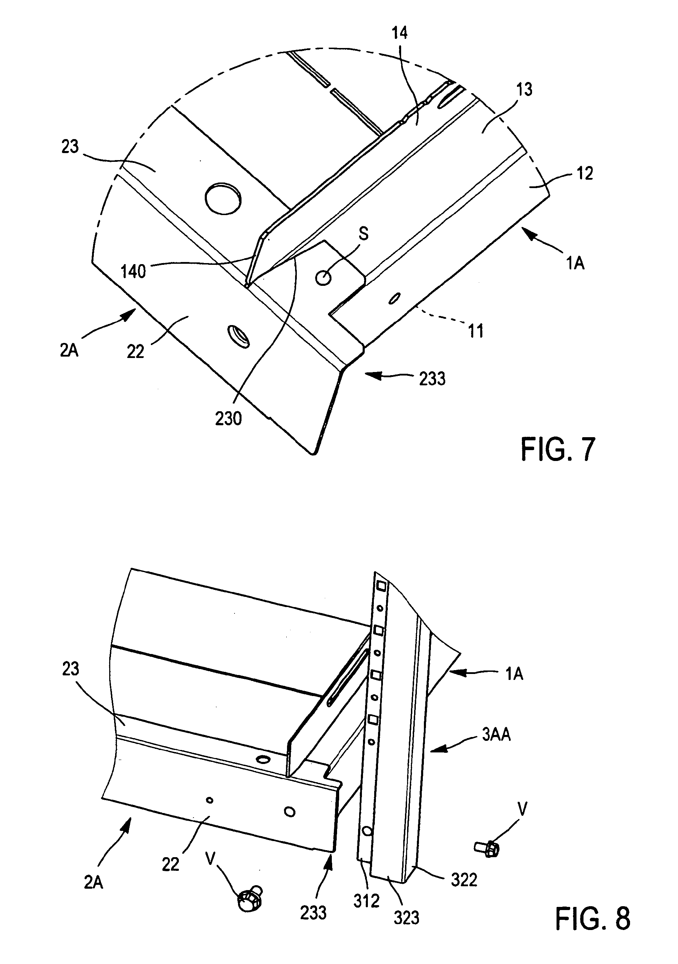

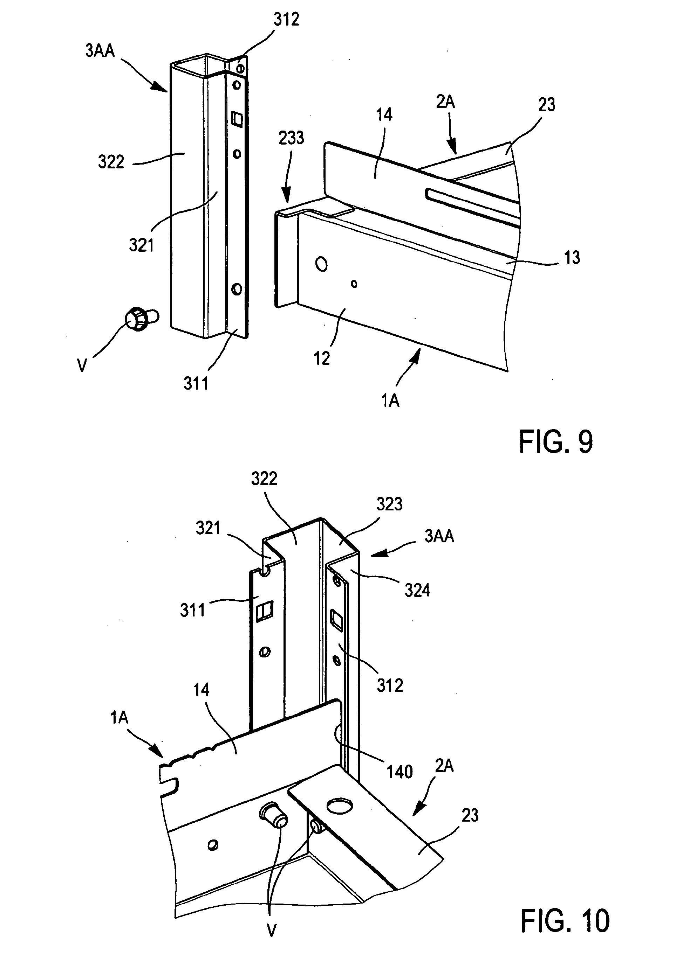

Outre la base G, la structure illustrée aux figures 8 à 13 comprend, pour chacun des couples de profilés adjacents 1A et 2A, 1A et 2B, 1B et 2A, et 1B et 2B, un troisième profilé fixé à angle droit aux profilés de ce couple, et portant respectivement la référence 3AA, 3AB, 3BA, et 3BB.

Comme le montre le mieux la figure 13, la structure peut ainsi être dotée de quatre montants perpendiculaires à la base G, chacun de ces montants étant constitué par le troisième profilé 3AA, 3AB, 3BA, et 3BB, qui est fixé à un couple correspondant de profilés adjacents de la base G.

Pour ce faire, il est prévu, pour chacun des couples de profilés adjacents de la base, que les deuxièmes faces des deuxième et troisième types, c'est-à-dire les faces 22 et 23, présentent une section saillante 233 qui s'étend au-delà du plan tangent à la première face du deuxième type 12.

Par ailleurs, le troisième profilé 3AA, 3AB, 3BA, et 3BB associé à chaque couple de profilés adjacents de la base G présente au moins des première et deuxième faces extrêmes 311 et 312 s'étendant à angle droit l'une de l'autre et prenant respectivement appui sur les première et deuxième faces du deuxième type, c'est-à-dire sur les faces 12 et 22.

En outre, le troisième profilé 3AA, 3AB, 3BA, 3BB associé à chaque couple de profilés adjacents de la base G présente des première et deuxième faces intermédiaires, référencées 321 et 322.

La première face intermédiaire 321 prend appui, dans la section saillante 233, sur la tranche de la deuxième face du troisième type 23, et la deuxième face intermédiaire 322 prend appui, toujours dans la section saillante 233, sur la tranche du dièdre que forment les deuxièmes faces des deuxième et troisième types, c'est-à-dire les faces 22 et 23.

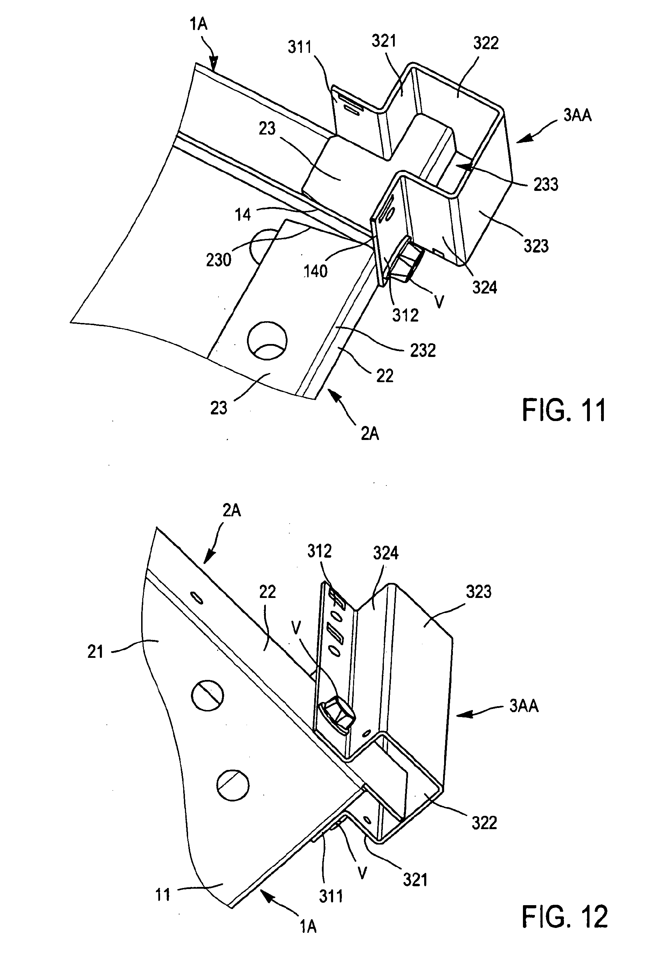

Comme le montrent le mieux les figures 11 et 12, la deuxième face intermédiaire 322 de chacun des troisièmes profilés 3AA, 3AB, 3BA, et 3BB peut avantageusement s'étendre au-delà du plan tangent à la deuxième face du deuxième type 22.

Ce troisième profilé peut ainsi comprendre des troisième et quatrième faces intermédiaires 323 et 324 qui s'étendent à angle droit l'une de l'autre et qui se raccordent à angle droit respectivement à la deuxième face intermédiaire 322 et à la deuxième face extrême 312.

Dans ces conditions, la deuxième face extrême 312 de chacun des troisièmes profilés 3AA, 3AB, 3BA, et 3BB peut prendre appui sur le bord 140 de la première face du quatrième type 14 du profilé 1A ou 1B correspondant, ce qui renforce encore la rigidité de la structure.

Comme le montre la figure 7, les profilés tels que 1A et 2A de chaque couple de profilés adjacents de la base G peuvent, en plus de leur liaison d'emboîtement, être rendus solidaires l'un de l'autre par tout moyen connu, et notamment par un point de soudure S.

De même, chaque troisième profilé, tel que 3AA, 3AB, 3BA, et 3BB, associé à chaque couple de profilés adjacents de la base G, peut être lié à chacun de ces profilés par tout moyen connu, et notamment au moyen de vis V comme illustré aux figures 8 à 12.

La structure de l'invention trouve une application privilégiée dans la réalisation de coffrets ou d'armoires de connexion électrique et / ou informatique.

## Revendications

1. Structure métallique comprenant au moins un premier et un deuxième profilés (1A, 2A) se rejoignant à angle droit, formant une première paire de profilés (1A, 2A), et présentant chacun une section transversale formant au moins un "U", cette structure étant réalisée au moins partiellement à partir d'un flan métallique (F) initialement plan, conformé par découpage et pliage, les premier et deuxième profilés (1A, 2A) présentant des première et deuxième faces respectives de premier type (11, 21), coplanaires et monobloc, des première et deuxième faces respectives de deuxième type (12, 22), formant un dièdre droit et non monobloc, et des première et deuxième faces respectives de troisième type (13, 23), coplanaires, non monobloc, et respectivement parallèles aux première et deuxième faces de premier type (11, 21), **caractérisée en ce que** le premier profilé (1A) comprend une première face de quatrième type (14) s'étendant à partir de la première face de troisième type (13) en s'éloignant, suivant une direction orthogonale, de la première face de premier type (11), **en ce que** la deuxième face de troisième type (23) présente une échancrure (230) s'étendant perpendiculairement à un pli (232) de séparation des deuxièmes faces de troisième et de deuxième types (23, 22), et **en ce que** les premier et deuxième profilés (1A, 2A) sont liés l'un à l'autre au moins par une liaison d'emboîtement obtenue par engagement d'un bord (140) de la première face du quatrième type (14) dans l'échancrure (230).

2. Structure métallique suivant la revendication 1, **caractérisée en ce qu'**elle comprend une deuxième paire de profilés (1B, 2B) formée d'un premier et d'un deuxième profilés (1B, 2B) également obtenus par découpage et pliage dudit flan, et **en ce que** chacun des premiers (1A, 1B) et deuxièmes (2A, 2B) profilés est respectivement lié à chacun des deuxièmes (2A, 2B) et premiers (1A, 1B) profilés par une liaison d'emboîtement obtenue par engagement d'un bord (140) d'une face du quatrième type (14) prévue sur l'un des profilés liés (1A, 1B) dans une échancrure (230) prévue sur l'autre des profilés liés (2A, 2B) .

3. Structure métallique suivant la revendication 2, **caractérisée en ce qu'**une face de quatrième type (14) est prévue sur le premier profilé (1A, 1B) de chaque paire (1A, 2A; 1B, 2B), et **en ce qu'**une échancrure (230) est prévue à chacune des deux extrémités du deuxième profilé (2A, 2B) de chaque paire.

4. Structure métallique suivant l'une quelconque des revendications 2 et 3, **caractérisée en ce que** les premier et deuxième profilés (1A, 1B; 2A, 2B) des première et deuxième paires (1A, 2A; 1B, 2B) définissent une base (G) de la structure et **en ce que** cette structure comprend en outre, pour chaque couple de profilés (1A, 2A; 1A, 2B; 1B, 2A; 1B, 2B) formé par un premier et un deuxième profilés appartenant ou non à une même desdites première et deuxième paires (1A, 2A; 1B, 2B), un troisième profilé (3AA, 3AB, 3BA, 3BB) fixé à angle droit aux premier et deuxième profilés (1A, 2A; 1A, 2B; 1B, 2A; 1B, 2B) de ce couple, la structure étant ainsi dotée de quatre montants perpendiculaires à la base et dont chacun est constitué par le troisième profilé (3AA, 3AB, 3BA, 3BB) fixé à un des quatre couples (1A, 2A; 1A, 2B; 1B, 2A; 1B, 2B) de premier et deuxième profilés.

5. Structure métallique suivant la revendication 4, **caractérisée en ce que**, pour chaque couple (1A, 2A; 1A, 2B; 1B, 2A; 1B, 2B) de premier et deuxième profilés, les deuxièmes faces des deuxième et troisième types (22, 23) présentent une section saillante (233) s'étendant au-delà d'un plan tangent à la première face du deuxième type (12), **en ce que** le troisième profilé (3AA, 3AB, 3BA, 3BB) présente au moins des première et deuxième faces extrêmes (311, 312) à angle droit prenant respectivement appui sur les première et deuxième faces du deuxième type (12, 22), et **en ce que** ce troisième profilé (3AA, 3AB, 3BA, 3BB) présente en outre au moins des première et deuxième faces intermédiaires (321, 322) prenant respectivement appui, dans la section saillante (233), sur la tranche de la deuxième face du troisième type (23) et sur la tranche d'un dièdre formé par les deuxièmes faces des deuxième et troisième types (22, 23).

6. Structure métallique suivant la revendication 5, **caractérisée en ce que**, pour chaque couple de premier et deuxième profilés, la deuxième face intermédiaire (322) du troisième profilé (3AA, 3AB, 3BA, 3BB) s'étend au-delà d'un plan tangent à la deuxième face du deuxième type (22), et **en ce que** le troisième profilé (3AA, 3AB, 3BA, 3BB) comprend en outre des troisième et quatrième faces intermédiaires (323, 324) à angle droit, se raccordant à angle droit respectivement à la deuxième face intermédiaire (322) et à la deuxième face extrême (312).

7. Structure métallique suivant l'une quelconque des revendications 5 et 6, **caractérisée en ce que** la deuxième face extrême (312) du troisième profilé (3AA, 3AB, 3BA, 3BB) prend appui sur le bord (140) de la première face du quatrième type (14).

8. Application d'une structure suivant l'une quelconque des revendications précédentes à la réalisation d'un coffret ou d'une armoire de connexion électrique et / ou informatique.

## Claims

1. Metallic structure comprising at least a first and a second section (1A, 2A) joining at a right angle, forming a first pair of sections (1A, 2A), and each one presenting a cross-section forming at least one "U", this structure being at least partially made up from a metallic blank (F), initially flat, shaped by cutting and folding, the first and second sections (1A, 2A) having first and second respective faces of a first category (11, 21), coplanar and single-unit, first and second respective faces of a second category (12, 22), forming a straight and non-single-unit dihedral, and first and second respective faces of a third category (13, 23), coplanar, non-single-unit, and respectively parallel to the first and second faces of the first category (11, 21), **characterised in that** the first section (1A) comprises a first face of a fourth category (14) extending from the first face of the third category (13) by being displaced away, in an orthogonal direction, from the first face of the first category (11), **in that** the second face of the third category (23) has a notch (230) extending perpendicularly to a fold (232) separating the second faces of the third and second categories (23, 22), and **in that** the first and the second section (1A, 2A) are connected to each other by at least one interlocking connection obtained by engaging an edge (140) of the first face of the fourth category (14) into the notch (230).

2. Metallic structure according to claim 1, **characterised in that** it comprises a second pair of sections (1B, 2B) formed from a first and a second section (1B, 2B) also obtained by cutting and folding of the said blank, and **in that** each of the first (1A, 1B) and second (2A, 2B) sections is respectively connected to each of the second (2A, 2B) and first (1A, 1B) sections by an interlocking connection obtained by engaging an edge (140) of one of the faces of the fourth category (14) provided on one of the connected sections (1A, 1B) into a notch (230) provided on the other of the connected sections (2A, 2B).

3. Metallic structure according to claim 2, **characterised in that** one face of the fourth category (14) is provided on the first section (1A, 1B) of each pair (1A, 2A; 1B, 2B) and **in that** one notch (230) is provided on each of the two extremities of the second section (2A, 2B) of each pair.

4. Metallic structure according to any one of claims 2 and 3, **characterised in that** the first and second sections (1A, 1B; 2A, 2B) of the first and second pairs (1A, 2A; 1B, 2B) make a base (G) for the structure and **in that** this structure also comprises, for each couple of sections (1A, 2A; 1A, 2B; 1B, 2A; 1B, 2B), formed by a first and second section either belonging or not to one of the said same first or second pairs (1A, 2A; 1B, 2B), a third section (3AA, 3AB, 3BA, 3BB) fixed at a right angle to the first and second sections (1A, 2A; 1A, 2B; 1B, 2A; 1B, 2B) of this couple, the structure thus being equipped with four perpendicular posts at the base and each of which is constituted by the third section (3AA, 3AB, 3BA, 3BB) fixed to one of the four couples (1A, 2A; 1A, 2B; 1B, 2A; 1B, 2B) of first and second sections.

5. Metallic structure according to claim 4, **characterised in that**, for each couple (1A, 2A; 1A, 2B; 1B, 2A; 1B, 2B) of first and second sections, the second faces of the second and third categories (22, 23) have a projecting section (233) extending beyond a tangent plane to the first face of the second category (12), **in that** the third section (3AA, 3AB, 3BA, 3BB) has at least first and second end faces (311, 312) at right angles leaning respectively on the first and second faces of the second category (12, 22) and **in that** this third section (3AA, 3AB, 3BA, 3BB) has at least first and second intermediary faces (321, 322) leaning respectively, in the protruding section (233), on the edge of the second face of the third category (23) and on the edge of a dihedral formed by the two faces of the second and third categories (22, 23).

6. Metallic structure according to claim 5, **characterised in that**, for every couple of first and second sections, the second intermediary face (322) of the third section (3AA, 3AB, 3BA, 3BB) extends beyond a tangent plane to the second face of the second category (22), and **in that** the third section (3AA, 3AB, 3BA, 3BB) also comprises third and fourth intermediary faces (323, 324) at a right angle, connecting respectively at a right angle to the second intermediary face (322) and to the second end face (312).

7. Metallic structure according to any one of claims 5 and 6, **characterised in that** the second end face (312) of the third section (3AA, 3AB, 3BA, 3BB) leans on the edge (140) of the first face of the fourth category (14).

8. Application of a structure according to any one of the previous claims to construct a casket or an electrical and/or computer cabinet.

## Patentansprüche

1. Metallstruktur mit wenigstens einem ersten und einem zweiten Profil (1A, 2A), die sich unter Bildung eines ersten Profilpaares (1A, 2A) unter einem rechten Winkel verbinden und jeweils einen wenigstens "U"-förmigen Querschnitt aufweisen, wobei diese Struktur wenigstens teilweise aus einer anfänglich ebenen Metallplatte (F) durch Stanzen und Biegen hergestellt wird, wobei das erste und zweite Profil (1A, 2A) aufweist jeweils eine erste und zweite Fläche der ersten Bauart (11, 21), die koplanar und einstückig sind, jeweils eine erste und zweite Fläche der zweiten Bauart (12, 22), die einen rechtwinkligen Dieder bilden und nicht einstückig sind, und jeweils eine erste und zweite Fläche der dritten Bauart (13, 23), die koplanar, nicht einstückig sind und jeweils parallel zu der ersten und zweiten Fläche der ersten Bauart (11, 21) liegen, **dadurch gekennzeichnet, dass** das erste Profil (1A) eine erste Fläche der vierten Bauart (14) umfasst, die sich von der ersten Fläche der dritten Bauart (13) in einer orthogonalen Richtung von der ersten Fläche der ersten Bauart (11) weg erstreckt, dass die zweite Fläche der dritten Bauart (23) einen Einschnitt (230) aufweist, der sich senkrecht zu einem Trennungsknick (232) der zweiten Flächen der dritten und vierten Bauart (23, 22) erstreckt, und dass das erste und zweite Profil (1A, 2A) miteinander wenigstens durch eine Steckverbindung miteinander verbunden sind, die durch Eingriff einer Kante (140) der ersten Fläche der vierten Bauart (14) in den Einschnitt (230) erhalten wird.

2. Metallstruktur nach Anspruch 1, **dadurch gekennzeichnet, dass** diese ein zweites Profilpaar (1B, 2B) umfasst, das aus einem ersten und einem zweiten Profil (1B, 2B) gebildet ist, das auch durch Stanzen und Biegen der Platte erhalten wird, und dass jedes der ersten (1A, 1B) und zweiten (2A, 2B) Profile jeweils mit jedem der zweiten (2A, 2B) und ersten (1A, 1B) Profile durch eine Steckverbindung verbunden ist, die durch Eingriff einer Kante (140) einer Fläche der vierten Bauart (14), die an einem der verbundenen Profile (1A, 1B) vorgesehen ist, in einen Einschnitt (230), der an dem anderen verbundenen Profil (2A, 2B) vorgesehen ist, erhalten wird.

3. Metallstruktur nach Anspruch 2, **dadurch gekennzeichnet, dass** eine Fläche der vierten Bauart (14) an dem ersten Profil (1A, 1B) jedes Paars (1A, 2A,; 1B, 2B) vorgesehen ist und dass jeder Einschnitt (230) an jedem der zwei Enden des zweiten Profils (2A, 2B) jedes Paars vorgesehen ist.

4. Metallstruktur nach einem der Ansprüche 2 und 3, **dadurch gekennzeichnet, dass** das erste und zweite Profil (1A, 1B; 2A, 2B) des ersten und zweiten Paars (1A, 2A; 1B, 2B) eine Basis (G) der Struktur bilden und dass diese Struktur ferner für jedes Profilpaar (1A, 2A; 1A, 2B; 1B, 2A; 1B, 2B), das durch ein erstes und zweites Profil ausgehend oder nicht von einem und demselben ersten und zweiten Paar (1A, 2A; 1B, 2B) gebildet ist, ein drittes Profil (3AA, 3AB, 3BA, 3BB) umfasst, das unter einem rechten Winkel zu den ersten und zweiten Profilen (1A, 2A; 1A, 2B; 1B, 2A; 1B, 2B) dieses Paares befestigt ist, wobei die Struktur **dadurch** mit vier Stützen senkrecht zur Basis versehen ist, von denen jede gebildet wird durch das dritte Profil (3AA, 3AB, 3BA, 3BB), das an einem der vier Paare (1A, 2A; 1A, 2B; 1B, 2A; 1B, 2B) des ersten und zweiten Profils befestigt ist.

5. Metallstruktur nach Anspruch 4, **dadurch gekennzeichnet, dass** für jedes Paar (1A, 2A; 1A, 2B; 1B, 2A; 1B, 2B) des ersten und zweiten Profils die zweiten Flächen der zweiten und dritten Bauart (22, 23) einen vorspringenden Querschnitt (233) aufweisen, der sich über eine zur ersten Fläche der zweiten Bauart (12) tangential verlaufenden Ebene hinaus erstreckt, dass das dritte Profil (3AA, 3AB, 3BA, 3BB) wenigstens eine erste und zweite Außenfläche (311, 312) unter rechtem Winkel aufweisen, die jeweils an der ersten und zweiten Fläche der zweiten Bauart (12, 22) anstoßen, und dass das dritte Profil (3AA, 3AB, 3BA, 3BB) ferner wenigstens eine erste und zweite Zwischenfläche (321, 322) aufweist, die jeweils in dem vorspringenden Querschnitt (233) an die Schnittstelle der zweiten Fläche der dritten Bauart (23) und an die Schnittstelle des durch die zweiten Flächen der zweiten und dritten Bauart (22, 23) gebildeten Dieders anstoßen.

6. Metallstruktur nach Anspruch 5, **dadurch gekennzeichnet, dass** sich für jedes erste und zweite Profilpaar die zweite Zwischenfläche (322) des dritten Profils (3AA, 3AB, 3BA, 3BB) über eine zu der zweiten Fläche der dritten Bauart (22) tangential verlaufenden Ebene hinaus erstreckt und dass das dritte Profil (3AA, 3AB, 3BA, 3BB) ferner eine dritte und vierte Zwischenfläche (323, 324) unter rechtem Winkel umfasst, die sich in einem rechten Winkel jeweils mit der zweiten Zwischenfläche (322) und der zweiten Außenfläche (312) verbinden.

7. Metallstruktur nach einem der Ansprüche 5 und 6, **dadurch gekennzeichnet, dass** die zweite Außenfläche (312) des dritten Profils (3AA, 3AB, 3BS, 3BB) an die Kante (140) der ersten Fläche der vierten Bauart (14) anstößt.

8. Verwendung einer Struktur nach einem der vorhergehenden Ansprüche bei der Herstellung eines Elektro- und/oder Netzwerk-Verteilerkastens oder Schaltschranks.
